# EUROPÄISCHE PATENTSCHRIFT

(11) **EP 3 088 369 B1**
(45) Veröffentlichungstag und Bekanntmachung des Hinweises auf die Patenterteilung: **13.02.2019**
(21) Anmeldenummer: 16165151.8
(22) Anmeldetag: 13.04.2016
(51) Int. Cl.: C03B 3/02, C03B 5/04, C03B 5/185, C03B 5/235

(54) **GLASSCHMELZANLAGE**
GLASS MELTING DEVICE
INSTALLATION DE FUSION DU VERRE

(30) Priorität: 27.04.2015 DE 102015106455; 22.05.2015 DE 102015108195
(43) Veröffentlichungstag der Anmeldung: 02.11.2016
(73) Patentinhaber: Beteiligungen Sorg GmbH & Co. KG, 97816 Lohr am Main (DE)
(72) Erfinder: Sorg, Alexander, 63739 Aschaffenburg (DE); Lindig, Matthias, 55218 Ingelheim (DE)
(74) Vertreter: Keil & Schaafhausen Patent- und Rechtsanwälte PartGmbB

(56) Entgegenhaltungen:
- WO-A1-2011/015994
- DE-A1-102010 020 176
- DE-C- 806 810
- US-A- 3 248 205
- US-A- 5 655 464
- PIEPER H: "LARGE END-FIRED FURNACES WITH A MELTING AREA OF 100 M2 AND MORE 1)", GLASS SCIENCE AND TECHNOLOGY, DGG, DEUTSCHLAND, Bd. 67, Nr. 3, 1. März 1994 (1994-03-01), Seiten 65-70, XP000433743, ISSN: 0946-7475

## Beschreibung

Die Erfindung betrifft eine Glasschmelzanlage mit einer Schmelzwanne mit U-Flammenbeheizung, die Seitenwände und einen Boden aufweist, und wobei die Schmelzwanne eine Schmelzfläche von mindestens 40 m² besitzt. Die Beschickung der Schmelzanlage erfolgt von einer Seite über einen Einlegevorbau mit einer Beschickungseinrichtung.

Die Schmelzwanne weist üblicherweise einen Einlass für Zuführung des Beschickungsguts, einen vorzugsweise kanalförmigen Auslass für die Entnahme des geschmolzenen Glases auf, wobei der Einlass der Schmelzwanne mit dem Einlegevorbau verbunden ist und wobei der Einlegevorbau eine Überdachung aufweist, die zur Beschickungsvorrichtung hin eine Stirnwand besitzt, die mit der Überdachung einen Gasraum einschließt, der zur Schmelzwanne hin offen ist. Die Fläche eines herkömmlichen Einlegevorbaus liegt in der Regel zwischen 1,5 m² und 3,5 m². An dem dem Einlass der Schmelzwanne gegenüber liegenden Ende weist der Einlagevorbau außerdem eine Öffnung in der Stirnwand auf, welche zur Eingabe des Beschickungsguts dient.

Der Glasschmelzprozess gehört zu den energieintensiven industriellen Herstellungsprozessen. Daher werden vielfältige Anstrengungen unternommen, die benötigte Energie pro hergestellter Tonne Glas zu reduzieren. Als Beispiel für den hohen Energieaufwand sei auf die Herstellung von sogenanntem Kalk-Natron-Silikatglas verwiesen. Diese Gruppe aus einer Vielzahl von Glaszusammensetzungen wird für 80% der Glasproduktion weltweit eingesetzt. Sie ist die Basis für die Herstellung von Behälter- und Flachglas. Als Energieträger für diesen Prozess werden überwiegend fossile Brennstoffe verwendet. Diese werden entweder mit Luft oder Sauerstoff als Oxidanten zur exothermen Reaktion gebracht. Die freigesetzte Energie wird im Verbrennungsraum auf das Schmelzbad bzw. das auf das Schmelzbad aufgelegte Rohstoffgemisch (Gemenge) übertragen. Beim Schmelzprozess wird ein großer Anteil der Energie zur Umwandlung des Rohstoffgemisches in eine flüssige Schmelze benötigt. Dieser Prozess verläuft endotherm. Etwa 35% der Energie, die zum Aufschmelzen und Aufheizen auf die erforderliche Prozesstemperatur benötigt wird, wird für die chemische Umsetzung benötigt. Nimmt man die Energie hinzu, die zum Aufheizen des Gemisches auf Reaktionstemperatur erforderlich ist, beträgt dieser Energieanteil über 60% der insgesamt auf das Schmelzbad übertragenen Energie.

Für die kontinuierliche Herstellung der Glasschmelze in größeren Mengen hat sich seit Ende des vorletzten Jahrhunderts die Wannentechnologie durchgesetzt. Dabei wird in eine Schmelzwanne vorgegebener Tiefe kontinuierlich das Rohstoffgemisch dosiert aufgegeben. Über der Schmelzwanne befindet sich ein Verbrennungsraum, in dem fossiler Brennstoff unter Zufuhr eines Oxidanten verbrannt wird. Das Abgas kann dabei zur Vorwärmung des Oxidanten dienen. Die Schmelzwanne hat einen kanalförmigen Auslass oder Abzug, aus dem das völlig geschmolzene und geläuterte Glas der Fertigung zugeführt wird.

Im Laufe der Zeit wurde die technische Ausführung der Glasschmelzanlagen ständig verbessert. Dies betraf im Wesentlichen die Qualitätsanforderungen, die Verlängerung der Lebensdauer der Schmelzanlagen, die Reduzierung der Investitionskosten und die Verringerung der Emissionen. Ein Großteil der Investitionen diente auch der Reduzierung des Energieverbrauchs. Die Energiekosten einer Glasschmelzanlage betragen über deren gesamte Laufzeit gerechnet ein Vielfaches der Investitionssumme für die Glasschmelzanlage selbst. Folglich sind die steigenden Energiekosten gerade heute ein wesentliches wirtschaftliches Argument für die erheblichen Anstrengungen zur Verringerung des Energieverbrauchs.

Bei diesen Entwicklungen kommt man aber schnell an technisch bedingte Grenzen. Ein theoretischer Grenzwert lässt sich wie folgt definieren (siehe Conradt, "Comparative Analysis of the Performance of Industrial Glass Melting Furnaces" in DGG GOMD Conference, Aachen 2014, Advances in Fusion and Processing of Glass).

Bei einer reinen Glasschmelze aus Rohgemenge für ein Kalk-Natron-Silikatglas und einer üblichen Austrittstemperatur der Glasschmelze aus der Schmelzanlage von 1.200° C muss mit einem spezifischen Energieverbrauch von 2,1GJ/t gerechnet werden. Dieser Betrag beinhaltet nur die chemische Umsetzung und das Aufheizen auf Prozesstemperatur ohne jegliche Verluste. Dieser Energiebedarf kann durch Veränderung und Behandlung des Rohstoffgemisches geringfügig beeinflusst werden.

Der theoretische Energieverbrauch erhöht sich in der Praxis deutlich insbesondere durch drei zusätzliche Wärmeverlustquellen: Wärmeverluste durch die Wandung der Schmelzanlage, Wärmeverluste durch die Abführung der heißen Verbrennungsgase aus der Schmelzanlage und Wärmeverluste durch den Wärmeinhalt des Schmelzflusses selbst, der die Schmelzanlage in Richtung Verarbeitung verlässt. Trotz aller technischen Verbesserungen ist beim derzeitigen Stand der Technik ein spezifischer Energieverbrauch von mehr als 4GJ/t üblich. Die Beeinflussbarkeit der genannten Wärmesenken mit dem Ziel der Senkung des Energiebedarfs ist nur in Grenzen möglich. Mögliche Maßnahmen sind:
- Der Anteil an Rohstoffgemisch kann durch Recyclingscherben, je nach Verfügbarkeit, bis über 90% ersetzt werden. Damit wird der Energiebedarf zur chemischen Umsetzung des Rohstoffgemisches erheblich reduziert.
- Der Bedarf an Einschmelzenergie kann auch durch Verbesserung der Wärmeleitfähigkeit der Rohstoffe reduziert werden. Das geschieht durch Pelletierung, eine Lösung die wegen der notwendigen Vermahlung der Rohstoffe und thermischen Behandlung jedoch aufwändig und teuer ist.
- Der Energieverbrauch lässt sich im begrenzten Rahmen auch durch Änderungen der Zusammensetzung der Komponenten verbessern. Dem stehen aber weitere, den Energieverbrauch erhöhende technische Sachverhalte entgegen.

Zusätzliche Energie wird benötigt, um einem nicht unbeträchtlichen Volumen der Glasschmelze in dem kontinuierlichen Prozess die Verweilzeit zu geben, um feste oder gasförmige Relikte zu entfernen. Feste Relikte sind Reste der schwerer löslichen Rohstoffgemenge, gasförmige Relikte sind Blasen, die aus dem Zersetzungsprozess der Rohstoffe herrühren. Wegen der vergleichsweise hohen Viskosität, auch bei hoher Prozesstemperatur, ist dieser Aufwand erheblich. Metallschmelzen haben oberhalb des Schmelzpunktes die Viskosität von Wasser. Blasen steigen in solchen Schmelzen in kurzer Zeit auf. In der Glasschmelze ist diese Aufstiegsgeschwindigkeit um Größenordnungen geringer. Das Schmelzgefäß muss daher entsprechend groß dimensioniert sein.

Die oben erwähnten Wärmeverluste durch die Wandung der Schmelzwanne sind proportional zur Oberfläche der Glasschmelzanlage. Der Wandaufbau der Schmelzwannen wurde über die Jahrzehnte stetig verbessert und es wurden zudem neue Materialien entwickelt, um diese Verluste zu minimieren.

Eine wichtige Wärmesenke ist der Wärmeinhalt der Verbrennungsgase. Die Größe des Verbrennungsraumes ist so ausgelegt, dass die Verweilzeit der Brenngase möglichst groß ist und das Volumen bzw. Oberfläche des Verbrennungsraumes wegen der Wandverluste gering gehalten wird. Die Wärme im Abgas wird in der Regel zur Vorwärmung der Verbrennungsluft verwendet. Dieser Wärmetauscherprozess ist jedoch physikalisch in seinem Wirkungsgrad begrenzt.

Schließlich bleibt als weitere wesentliche Wärmesenke die Glasschmelze selbst, die die Schmelzwanne verlässt und durch ein Kanalsystem zur Verarbeitung geleitet wird. Die Verarbeitungstemperatur liegt in der Regel mindestens 200°C unterhalb der Austrittstemperatur aus der Schmelzwanne. Eine entsprechend hohe Kühlleistung hat nun wiederum einen unnötigen Wärmeverlust zur Folge. Man ist daher bestrebt, die Temperatur des Schmelzflusses aus der Schmelzwanne so niedrig wie möglich zu halten.

Allen Ansätzen zur Verbesserung des energetischen Wirkungsgrades gemein ist die Reduzierung der Größe der Schmelzwanne. Die Auswertung von Energieverbrauch und Schmelzleistung zahlreicher Schmelzanlagen zeigt einen deutlichen Zusammenhang. Die Verringerung der Größe der Schmelzanlage geht einher mit einer Verringerung der Wandoberfläche und Wandverluste, eine gute Isolierung der Wandung vorausgesetzt. Allerdings bedingt die Reduzierung der Größe der Schmelzwanne einer Verringerung der herstellbaren Glasmenge. Eine spezifische Belastung (spezifische Schmelzleistung) einer Schmelzanlage von ca. 3,5 t/m²d kann heute unter bestimmten, günstigen schmelztechnischen Bedingungen erreicht werden. Es ist wünschenswert, den Durchsatz einer Glasschmelzanlage und entsprechend die spezifische Schmelzleistung bei mindestens gleichbleibender Glasqualität zu erhöhen, wobei der Energieverbrauch weiter minimal gehalten werden soll.

Die Schmelzfläche ist das kritische Maß für die energetische Optimierung einer Glasschmelzanlage. Herkömmliche Schmelzanlagen besitzen eine Schmelzfläche zwischen 30 m² und 200 m².

In der Schmelzwanne schwimmt das von dem Einlegevorbau kommende, noch unaufgeschmolzene Rohstoffgemisch auf der Schmelzfläche. Dabei soll sich die Bedeckung gleichmäßig und nach Möglichkeit dünn ausbreiten. Das Rohstoffgemisch zeichnet sich in dem noch unaufgeschmolzenen Zustand durch eine sehr geringe Wärmeleitfähigkeit und besitzt als loses Haufwerk eine vergleichsweise hohe Porosität. Die Wärmeleitung wird dadurch noch weiter verringert. Man geht von einer Wärmeleitfähigkeit des Gemenges von ca. 1 W/mK aus. Das ist mehr als das Zehnfache geringer im Vergleich zur Leitfähigkeit der Glasschmelze, unterschiedlich je nach Farbe und Transmission. Die Wärmeübertragung auf die Gemengebedeckung ist daher sehr eingeschränkt und der Grund für das Bestreben nach einer möglichst dünnen Bedeckung. Allen Bestrebungen, das Aufschmelzen der Rohstoffe zu beschleunigen, ist gemein, dass die Energiedichte entweder über der Rohstoffbedeckung oder unterhalb intensiviert wird.

Aus den Druckschriften EP 0 137 881 B1 und US 4,381,934 ist bekannt, dass der Energieeintrag auf den Rohstoffstrom ausschließlich von oben über Strahlung erfolgt. Der Rohstoff bildet dabei eine geneigte Schüttungsebene, von der abgeschmolzen wird. Bei der EP 1 904 408 B1 erfolgt der Energieeintrag über Brenner, die von oben auf das Schmelzbad gerichtet sind. Diese technischen Lehren haben jedoch mehrere Nachteile: Der direkte Brennerimpuls im Kontakt mit dem noch unaufgeschmolzenen Rohstoff führt zu einer erheblichen Verstaubung. Leichter schmelzende Komponenten lösen sich von der gesamten Mischung. Die Schmelze wird inhomogen. Die hohe Energiedichte, bedingt durch den direkten Brennerkontakt mit den Rohstoffen, kann zu einer erheblichen Verdampfung der Komponenten mit höherem Dampfdruck (zum Beispiel Alkalien) führen. Auch hier ist mit einer Inhomogenität der Glasschmelze zu rechnen.

Ungan beschreibt in "Glastechn. Ber. 59 (1986) 10, 279-291" die physikalischen Grenzen der Energieübertragung auf das unaufgeschmolzene Gemenge. Das auf der Glasschmelze schwimmende Rohstoffgemisch nimmt annähernd zu gleichen Teilen die Energie über die Strahlung im Verbrennungsraum und durch die Wärmeleitung über die Schmelze von unten auf. Eine bestmögliche Effizienz der Abschmelzung des Rohstoffgemisches kann nur erfolgen, wenn beide Energieströme zur Verfügung stehen. Allein dies erlaube, die für die Ausbreitung des Gemenges notwendige Schmelzfläche zu verkleinern. Für den Energieeintrag unterhalb des schwimmenden Gemenges sei notwendig, dass in dem Schmelzgefäß auch freie, von Gemenge unbedeckte Flächen zur Verfügung stehen. Erst dann könne die Schmelze die Energie aufnehmen und getragen von der Dichtekonvektion die Energie unter die Gemengebedeckung transportieren. Eine zur Anwendung dieses Prinzips notwendige erhebliche Vergrößerung der Schmelzwanne, um mehr von Gemenge unbedeckte Fläche zu erhalten, ist jedoch technisch und finanziell sehr aufwändig.

In der Druckschrift DE 10 2010 020 176 A1 wird für eine Glasschmelzwanne mit U-Flammenbeheizung mit einem seitlichen Vorbau erläutert, dass zur Verringerung von Wärmeverlusten an die Atmosphäre und Staubtransport in den Oberofen die Länge des Vorbaus LV und die Länge der Überdachung LG verändert werden kann, wobei LV mindestens 1500 mm und LG mindestens 800 mm beträgt. Zudem soll der Vorbau zur Wanne hin offen sein, so dass Wärme über Strahlung in den Oberbau des Vorbaus eindringen kann.

Aufgabe der Erfindung ist es daher, eine Glasschmelzanlage der eingangs genannten Art so auszubilden, dass die spezifische Schmelzleistung bei zumindest gleichbleibender Glasqualität erhöht wird, wobei der Energieverbrauch weiter minimal bleibt.

Diese Aufgabe wird erfindungsgemäß dadurch gelöst, dass die Beschickungsfläche des Einlegevorbaus mindestens 8 m² und bei einer Schmelzfläche größer als oder gleich 115 m² mindestens 7% der Schmelzfläche der Schmelzwanne beträgt. In vorteilhafter Weise beträgt die Beschickungsfläche höchstens 25% der Schmelzfläche der Schmelzwanne. Bei der angegebenen Größe der Beschickungsfläche wird zum einen eine hohe spezifische Schmelzleistung erreicht und zum anderen die Schmelzbad-Oberfläche so weit frei von der Rohstoffbedeckung gehalten, dass ausreichend Energie in die Glasschmelze gelangen kann. Dies wird erreicht durch die erfindungsgemäße erhebliche Vergrößerung des Einlegevorbaus. Die Einstrahlung in den Einlegevorbau erlaubt einen bedingten Energieeintrag von oben auf das Beschickungsgut. Durch den vergrößerten Einlegevorbau wird die Bedeckung der Schmelzbad-Oberfläche in der Schmelzwanne bezogen auf den Durchsatz an Glas verkleinert. Damit steht genügend freie Oberfläche zur Verfügung, die es erlaubt, den Energieeintrag in die Glasschmelze und schlussendlich unter die Gemengebedeckung zu transportieren.

Besonders gute Ergebnisse hinsichtlich der spezifischen Schmelzleistung, die bis auf 5 t/m²d erhöht werden kann, werden erzielt, wenn die Beschickungsfläche des Einlegevorbaus bei einer Schmelzfläche größer als oder gleich 90 m² mindestens 9% der Schmelzfläche der Schmelzwanne beträgt (in vorteilhafter Weise höchstens 20% der Schmelzfläche der Schmelzwanne). Vorzugsweise beträgt die Beschickungsfläche des Einlegevorbaus bei einer Schmelzfläche größer als oder gleich 80 m² mindestens 10% der Schmelzfläche der Schmelzwanne (in vorteilhafter Weise höchstens 18% der Schmelzfläche der Schmelzwanne).

Die Beschickungsfläche kann eine Rechteck-Form oder eine beliebige andere Form, beispielsweise eine Trapez-Form, die Form eines asymmetrischen Trapezoids oder eine Sechseck-Form, aufweisen. Der Einlegevorbau und damit die Beschickungsfläche, welche die Grundfläche des Einlegevorbaus darstellt, wird begrenzt durch die Stirnwand des Einlegevorbaus mit der Öffnung zur Eingabe des Beschickungsguts an dem einen Ende in Transportrichtung des Beschickungsguts, die Seite mit der direkten Verbindung zur Schmelzwanne an dem in Transportrichtung gegenüber liegenden Ende des Einlegevorbaus und die mindestens zwei Seitenwände, welche entweder parallel oder nicht-parallel - je nach Form der Grundfläche bzw. Beschickungsfläche des Einlegevorbaus - angeordnet sind. Hierbei erstreckt sich die Beschickungsfläche parallel zur Oberfläche des geschmolzenen Glases in der Glasschmelzanlage.

Die erfindungsgemäße Größe der Beschickungsfläche des Einlegevorbaus erweist sich insbesondere für Glasschmelzanlagen mit einer Schmelzfläche (die Beschickungsfläche wird nicht zur Schmelzfläche hinzugerechnet) von mindestens 40 m² und höchstens 200 m² als vorteilhaft.

Der Einlegevorbau und die Schmelzwanne sind erfindungsgemäß Aggregate, welche das Glasmaterial aufnehmen. Die Oberfläche des in der Schmelzwanne und dem Einlegevorbau angeordneten Glasmaterials ist zumindest teilweise mit Gemenge bedeckt, wobei die Oberfläche des Glasmaterials im Einlegevorbau zum größten Teil mit noch nicht geschmolzenem Gemenge bedeckt ist.

Gemäß einer bevorzugten Ausführungsform der Erfindung weist der Scheitel, d.h. die höchste Linie, der Überdachung des Einlegevorbaus einen Abstand h von der Steinkante (d.h. der Wannenstein-Oberkante oder Gewölbestich-Kante) des Einlegevorbaus von mindestens 400 mm, vorzugsweise mindestens 500 mm, auf. Dadurch wird die Einbringung von Strahlungsenergie in den Einlegevorbau unterstützt und somit eine Reduzierung des Energieverbrauchs erreicht.

Es hat sich ferner als vorteilhaft erwiesen, dass der Einlegevorbau mit einer elektrischen Widerstandsbeheizung mit mindestens einer Elektrode ausgerüstet ist. Hierbei können eine Elektrode oder zwei und mehr Elektroden im Einlegevorbau und ggf. eine Elektrode im Bereich der Schmelzwanne angeordnet sein. An die Elektroden wird eine Wechselspannung angelegt. Die Elektroden haben unterschiedliche Potentiale. Über die beweglichen Ladungsträger, vornehmlich die Alkalioxide in der Schmelze, wird der Strom geleitet. Die Leitung erzeugt in der Schmelze eine innere Reibung. Diese Reibungswärme, die sogenannte Joule'sche Wärme führt letztlich zu der Temperaturerhöhung in der Schmelze. Diese Wärmeübertragung ist gegenüber der Wärmeübertragung durch Strahlung, bzw. fossile Beheizung, erheblich effizienter. Bis auf die Verlustleistung wird die elektrische Leistung im Bereich des Einlegevorbaus vollständig auf die Schmelze übertragen. Die vorliegende Erfindung kombiniert daher die vollelektrische Beheizung im Bereich des Einlegevorbaus mit der fossilen Schmelztechnologie im Bereich der Schmelzwanne. Dies ist insbesondere auch dadurch möglich, dass die Beschickungsfläche des Einlegevorbaus vergrößert wurde. Die Abschmelzung im Bereich des Einlegevorbaus wird erheblich beschleunigt, während der Bereich der fossilen Beheizung bezogen auf den Glasdurchsatz in der Größe reduziert werden kann. Daher kann durch diese Maßnahme die spezifische Schmelzleistung weiter gesteigert werden.

Es ist der Verdienst des Erfinders erkannt zu haben, dass durch die Verwendung einer elektrischen Zusatzbeheizung in einem Einlegevorbau ein Einfrieren der Schmelze am Boden vermieden werden kann. Der zusätzliche Einsatz einer elektrischen Beheizung ist zunächst aufwändiger, jedoch wird der Aufwand durch die deutlich erhöhte spezifische Schmelzleistung mehr als ausgeglichen. Es wurde weiter erkannt, dass sich die bekannten Nachteile einer vollelektrischen Beheizung der Schmelze, die darin bestehen, dass Schwankungen in der Belastung der Anlagen schnell zu Änderungen in der oberflächlichen Bedeckung der Schmelze mit Beschickungsgut führen und einen Wärme- und damit Energieverlust hervorrufen und dass die Verweilzeit der Schmelze im Schmelzgefäß häufig vergleichsweise gering ist, in einem (im Vergleich zur Schmelzwanne) kleinen Einlegevorbau weniger kritisch auswirken und stattdessen aufgrund der Anordnung der Elektroden eine Zufuhr von Energie an der erforderlichen Stelle der Glasschmelzanlage realisiert werden kann. Die Glasqualität kann durch die erfindungsgemäße Maßnahme verbessert werden.

In einem bevorzugten Ausführungsbeispiel ragen mindestens zwei Elektroden seitlich in die Schmelze hinein, wobei jeweils zwei seitlich hineinragende Elektroden gegenüber liegend angeordnet sind und ein Elektrodenpaar ausbilden. Der Vorteil der seitlichen Anordnung der Elektroden besteht darin, dass diese aufgrund ihrer Lage nicht mit metallischen Verunreinigungen, die beispielsweise durch Fremdscherben in die Schmelze eingebracht werden, reagieren oder legieren. Die metallischen Verunreinigungen sinken die aufgrund ihrer hohen Dichte auf den Boden des Einlegevorbaus ab.

Es hat sich weiter als vorteilhaft erwiesen, dass mindestens eine Elektrode der mindestens zwei Elektroden vom Boden des Einlegevorbaus in die Schmelze quer zur Transportrichtung des Beschickungsguts im Einlegevorbau hineinragt und eine Bodenelektrode ausbildet, wobei vorzugsweise jede Bodenelektrode einem seitlich in die Schmelze hineinragendem Elektrodenpaar zugeordnet und in gleichem Abstand Y von der Stirnwand des Einlegevorbaus angeordnet ist. Hierbei ist die Bodenelektrode vorzugsweise etwa mittig zwischen den vorderen Enden der seitlichen Elektroden platziert. Diese Ausführungsform ist insbesondere dann vorteilhaft, wenn eine gute Trennung der Recyclingscherben von metallischen Verunreinigungen gegeben ist. Bei dem bevorzugten Ausführungsbeispiel mit einem seitlich angeordneten Paar von Elektroden und einer Bodenelektrode kann in vorteilhafter Weise die spezifische Belastung der einzelnen Elektrode (in A/cm²) reduziert werden, was zu einer Verlängerung der Lebensdauer der jeweiligen Elektrode führt.

In einer Weiterbildung der Erfindung ragen die mindestens zwei Elektroden mit einem vorderen Abschnitt X in die Glasschmelze hinein, wobei die Länge des Abschnitts X mindestens 200 mm, vorzugsweise mindestens 400 mm und/oder vorzugsweise höchstens 1200 mm beträgt. Hierbei ragen die mindestens zwei Elektroden quer zur Transportrichtung des Beschickungsguts im Einlegevorbau in die Schmelze hinein. Auch bei dieser Ausführungsform kann durch Verlängerung des in die Glasschmelze hineinragenden Abschnitts die Belastung der Elektrode reduziert und entsprechend die Lebensdauer verlängert werden.

Aus dem gleichen Grund ist ein Einsatz einer Vielzahl von Elektroden von Vorteil, wobei ein weiteres seitlich angeordnetes Elektrodenpaar und/oder eine weitere Bodenelektrode einen Abstand Y₂ zu einem zur Stirnwand des Einlegevorbaus benachbarten seitlich angeordneten Elektrodenpaar und/oder zu einer zur Stirnwand des Einlegevorbaus benachbarten Bodenelektrode aufweist, welcher mindestens 200 mm, vorzugsweise mindestens 400 mm und/oder vorzugsweise höchstens 2000 mm beträgt. Der Abstand Y₂ wird ebenfalls parallel zur Transportrichtung des Beschickungsguts im Einlegevorbau gemessen.

In einem weiteren Ausführungsbeispiel weisen die zur Stirnwand benachbarten mindestens zwei Elektroden einen Abstand Y von der Stirnwand auf, welcher mindestens 400 mm, vorzugsweise mindestens 700 mm und/oder vorzugsweise höchstens 2000 mm beträgt. Der Abstand Y wird parallel zur Transportrichtung des Beschickungsguts im Einlegevorbau gemessen. Der angegebene Abstand der Elektroden von der Stirnwand ist deshalb von Vorteil, da diese dann in einem Bereich der Schmelze angeordnet sind, die eine höhere Temperatur aufweist. Dort besitzt die Schmelze eine höhere elektrische Leitfähigkeit aufgrund der höheren Temperatur. Folglich können die Elektroden dort mehr Joule'sche Wärme erzeugen.

Es ist weiter von Vorteil, wenn jedes seitlich hineinragende Elektrodenpaar einen Abstand Z von der Steinkante des Einlegevorbaus aufweist, der mindestens 200 mm, vorzugsweise mindestens 400 mm und/oder vorzugsweise höchstens 800 mm beträgt. Der Abstand Z wird in Richtung des Bodens des Einlegevorbaus von der Steinkante des Einlegevorbaus ausgehend gemessen. Der Vorteil dieser Ausführungsform ergibt sich daraus, dass sich die Elektroden bei dieser Anordnung im Kernbereich der Strömungswalze und in einem ausreichenden Abstand von der Schmelzgutbedeckung befinden. Auch hier ist die elektrische Leitfähigkeit der Schmelze günstig für die Erwärmung des Schmelzguts. Weiter sind die Elektroden bei diesem Abstand von der Steinkante auch in einem ausreichenden Abstand von dem nicht aufgeschmolzenen Schmelzgut angeordnet, so dass Reaktionen des Elektrodenmaterials mit diesem Stoffstrom vermieden werden können.

Alternativ oder zusätzlich kann die Schmelze in dem Einlegevorbau auch mit mindestens einem in die Schmelze vom Boden eintauchenden Brenner, welcher mit jeglicher Art von Brennstoff arbeitet, insbesondere brennbaren Gasen, beheizt werden. Diese Beheizungstechnologie, welche zur Bildung von Blasen führt, kann im vorliegenden Fall jedoch angewendet werden, da sich nach dem Einlegevorbau eine Schmelzwanne anschließt, welche ermöglicht, dass derartige Blasen wieder entfernt werden können.

Die Erfindung wird nachfolgend anhand von Ausführungsbeispielen näher erläutert, welche in den Figuren dargestellt sind.

Es zeigen schematisch:
- Fig. 1: in einer Draufsicht eine Schmelzwanne mit U-Flammenbeheizung mit einem Einlegevorbau eines ersten Ausführungsbeispiels einer erfindungsgemäßen Glasschmelzanlage,
- Fig. 2: einen Schnitt durch den Einlegevorbau und die Schmelzwanne entlang der Schnittebene A-A des in Fig. 1 gezeigten Ausführungsbeispiels,
- Fig. 3 und 4: einen Vergleich der Bedeckung der Oberfläche der Schmelze in der Schmelzwanne einer erfindungsgemäßen Schmelzanlage mit einer großen Beschickungsfläche des Einlegevorbaus mit einer Durchsatzleistung von 300 t/d (Fig. 3) und mit einer herkömmlichen Beschickungsfläche des Einlegevorbaus mit einer Durchsatzleistung von 150 t/d (Fig. 4),
- Fig. 5: ein zweites Ausführungsbeispiel einer erfindungsgemäßen Glasschmelzanlage in einer Draufsicht,
- Fig. 6: das zweite Ausführungsbeispiel der Glasschmelzanlage gemäß Fig. 5 in einem Schnitt entlang der Schnittebene B - B,
- Fig. 7: ein drittes Ausführungsbeispiel einer erfindungsgemäßen Glasschmelzanlage in einer Draufsicht,
- Fig. 8: ein viertes Ausführungsbeispiel einer erfindungsgemäßen Glasschmelzanlage in einer Draufsicht,
- Fig. 9: das vierte Ausführungsbeispiel einer erfindungsgemäßen Glasschmelzanlage gemäß Fig. 8 in einem Schnitt entlang der Ebene C - C und
- Fig. 10: ein fünftes Ausführungsbeispiel einer erfindungsgemäßen Glasschmelzanlage in einer Draufsicht.

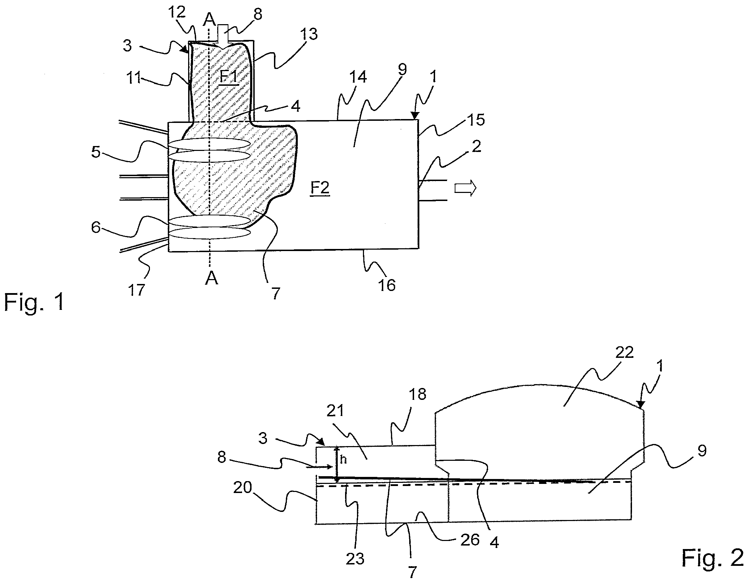

In Fig. 1 ist eine Schmelzwanne 1 einer nicht näher dargestellten Glasschmelzanlage des Typs U-Flammenwanne gezeigt, an deren einer Seitenwand 14 ein Einlegevorbau 3 angeordnet ist. Der Einlegevorbau 3 endet an dem Einlass 4 der Schmelzwanne 1 und mündet dort in die Schmelzwanne 1. Auf der linken Seite, d.h. an der Seitenwand 17 der Schmelzwanne 1, der Fig. 1 sind die Brennerports 5, 6 der beiden nebeneinander angeordneten Brenner mit der Zuführung des Oxidanten und des Brennstoffs angedeutet. Daran schließen sich zur regenerativen Wärmerückgewinnung zwei ebenfalls nicht dargestellte Kammern eines Regenerators an. An der Seitenwand 15, welche der Seitenwand 17 mit den Brennerports 5, 6 gegenüber liegt ist der vorzugsweise kanalförmige Auslass 2 der Schmelzwanne 1 angeordnet, der dem Abzug der Glasschmelze dient.

Die Glasschmelzanlage wird kontinuierlich mit nicht geschmolzenem Beschickungsgut 7 beschickt. Dabei wird das Beschickungsgut 7 über eine nicht dargestellte Beschickungsvorrichtung dem Einlegevorbau 3 zugeführt. Dies wird durch den Pfeil 8 angedeutet. Von dort wird das Beschickungsgut 7 auf die Glasschmelze 9 geschoben. Solange das Beschickungsgut 7 noch nicht vollständig aufgeschmolzen ist, schwimmt es auf der Glasschmelze 9, deren Oberfläche in Fig. 2 mit einer gestrichelten Linie angedeutet ist, und wird von oben über die Wärme-, bzw. Flammenstrahlung im Brennerraum 22 und gleichzeitig von unten über die Glasschmelze 9 durch Wärmeleitung aufgeheizt. Die Wärmeleitung der Abdeckung durch das Gemenge 7 ist sehr begrenzt. Sie liegt unter 1 W/mK. Die Wärmeleitfähigkeit der Glasschmelze 9 liegt dagegen um eine Potenz höher, also bei über 10 W/mK.

Der Einlegevorbau 3 wird durch Seitenwände 11, 12, 13 und den Auslass 4 begrenzt, welche parallel zur Transportrichtung des Beschickungsguts eine Beschickungsfläche F1 ausbilden. Weiter weist der Einlegevorbau 3 einen Boden 26 auf. Die (teilweise geschmolzene) Glasschmelze 9 ist in einem Becken angeordnet, das an der Steinkante (Becken-Oberkante) 23 endet.

Die Schmelz(wannen)fläche F2 ist definiert als die Grundfläche des Brennerraumes 22 im Bereich des Schmelzwannenbeckens, das von Seitenwänden 14 bis 17 begrenzt wird.

Der Einlegevorbau 3 wurde bisher im Vergleich zur Schmelzfläche F2 klein gehalten. Die Bedeckung der Glasschmelze 9 mit Beschickungsgut 7 wird nun dadurch verringert, dass der Einlegevorbau 3 deutlich vergrößert wird. Die Beschickungsfläche F1 des Einlegevorbaus 3 beträgt gemäß der vorliegenden Erfindung mindestens 8 m² und bei einer Schmelzfläche F2 größer oder gleich 115 m² mindestens 7 % der Schmelzfläche F2, vorzugsweise bei einer Schmelzfläche F2 größer oder gleich 90 m² mindestens 9 % der Schmelzfläche F2, besonders bevorzugt bei einer Schmelzfläche F2 größer oder gleich 80 m² mindestens 10 % der Schmelzfläche F2. Es ist von Vorteil, wenn die Beschickungsfläche des Einlegevorbaus höchstens 25 % der Schmelzfläche F2, vorzugsweise höchstens 20%, besonders bevorzugt höchstens 18 % der Schmelzfläche F2 beträgt.

Bei herkömmlichen Glasschmelzanlagen liegt die Grenze der spezifischen Belastung bei etwas über 3,5 t/m²*d und der spezifische Energieverbrauch bei einem Scherbenzusatz von >70% bei etwa 960 kWh/t Glas (3450 kJ/t).

Modellrechnungen haben gezeigt, dass mit der erfindungsgemäßen Vergrößerung des Einlegevorbaus 3 eine Steigerung der spezifischen Schmelzleistung auf >5 t/m^{2*}d möglich ist. Der Energieverbrauch lässt sich bezogen auf 50% Scherbenzusatz in dem Berechnungsbeispiel damit auf 3,3 GJ/t Glas reduzieren.

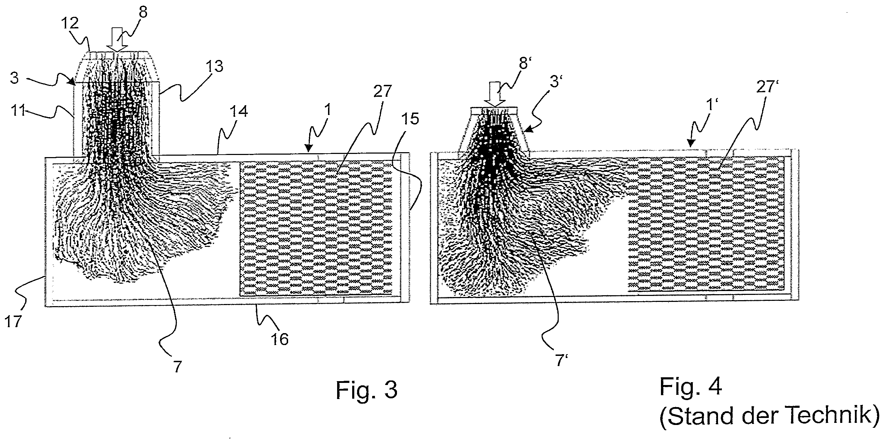

Eine derartige Modellrechnung ist in den Fig. 3 und 4 dargestellt. In beiden Fällen hat die Schmelzanlage eine Schmelzfläche der Schmelzwanne 1,1' von jeweils 60 m². In die Schmelzfläche wird üblicherweise die Beschickungsfläche des Einlegevorbaus 3, 3' nicht eingerechnet. Die sechseckförmige Beschickungsfläche des Einlegevorbaus 3 der in Fig. 3 dargestellten erfindungsgemäßen Schmelzanlage beträgt 9 m², während die Beschickungsfläche des Einlegevorbaus 3' der in Fig. 4 dargestellten herkömmlichen Schmelzanlage 2,2 m² beträgt.

Die Schmelzleistung der in Fig. 3 dargestellten Schmelzanlage beträgt 300 t/d während die Schmelzleistung der herkömmlichen, in Fig. 4 dargestellten Schmelzanlage lediglich 150 t/d beträgt.

Das noch nicht aufgeschmolzene Schmelzgut 7, welches auf dem Schmelzbad schwimmt, wird in Fig. 3 und 4 durch Trajektoren dargestellt. Die freie Fläche 25, 25' des Schmelzbades, welche nicht von Schmelzgut bedeckt ist, ist schraffiert gekennzeichnet. Es ist leicht erkennbar, dass trotz Verdoppelung der Schmelzleistung bei der in Fig. 3 gezeigten Schmelzanlage mit größerem Einlegevorbau 3 die freie Fläche 25 gegenüber der freien Fläche 25' in Fig. 4 bei der Schmelzanlage mit kleinerem Einlegevorbau 3' und mit deutlich niedrigerer Belastung annähernd gleich groß ist. Die freie Fläche 25, 25' ist wesentlich dafür verantwortlich, dass Strahlungsenergie aus dem Feuerungsraum über der Schmelzfläche in die Schmelze 9 eindringen kann. Die Strahlungsenergie dringt über die freie Oberfläche in das Glasbad ein, die so erwärmte Schmelze strömt auf Grund der Dichtekonvektion zurück in den Bereich der Schmelzgutaufgabe. Der heiße Schmelzenstrom fördert das Abschmelzen des Schmelzgutes unterhalb der Schmelzgutbedeckung.

Der in Fig. 1 und 2 dargestellte Einlegevorbau 3 hat eine Überdachung 18, die zur Beschickungsvorrichtung hin eine Stirnwand 20 aufweist, die mit der Überdachung 18 einen Gasraum 21 einschließt. Der Scheitel der Überdachung 18 im Gasraum 21 hat einen Abstand h von mindestens 400 mm, vorzugsweise mindestens 500 mm von der Steinkante 23 des Einlegevorbaus 3. Damit soll die Zufuhr von Energie durch Strahlung und/oder Flammengase im Bereich des Einlegevorbaus gefördert werden.

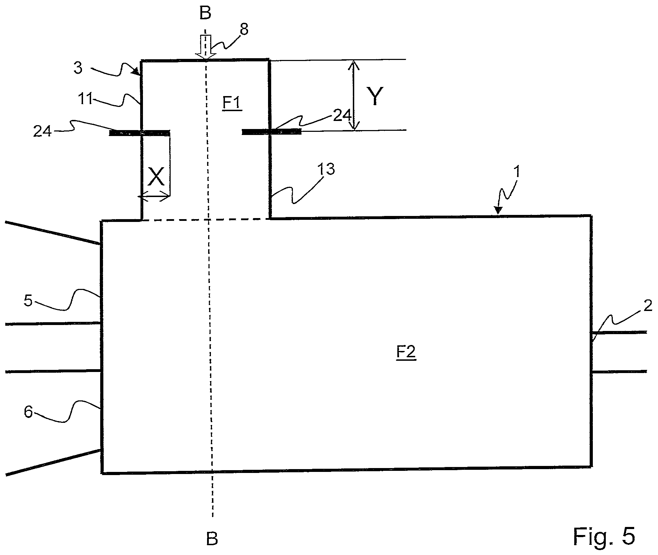

Der Einlegvorbau 3 kann mit einer zusätzlichen elektrischen Widerstandsbeheizung ausgerüstet sein. Beispiele hierfür werden nachfolgend anhand der Fig. 5 bis 10 erläutert. Der Aufbau der Glasschmelzanlagen, die in den Fig. 5 bis 10 gezeigt sind, entspricht bis auf die Elektroden zur elektrischen Beheizung dem in den Fig. 1 und 2 dargestellten ersten Ausführungsbeispiel.

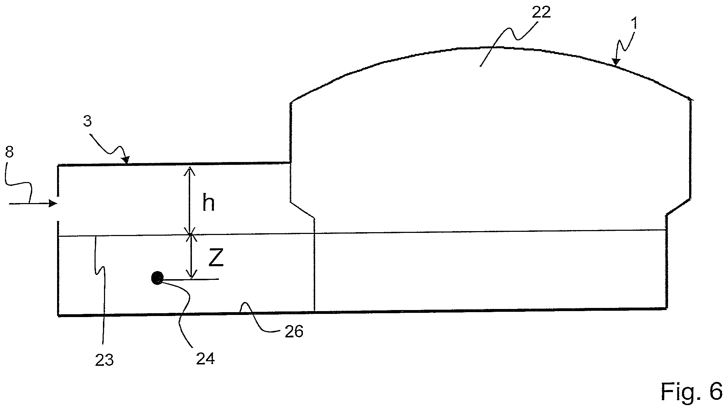

Das in Fig. 5 und 6 dargestellte Ausführungsbeispiel besitzt zwei Elektroden 24 im Bereich des Einlegevorbaus 3, die von den Seitenwänden 11 bzw. 13 seitlich (d.h. quer zur Transportrichtung des Beschickungsguts) in die Schmelze hineinragen. Die beiden Elektroden 24 sind gegenüber liegend angeordnet und bilden ein Elektrodenpaar.

Die Elektroden 24 ragen mit einem vorderen Abschnitt mit der Länge X (Länge gemessen von der Seitenwand 11 bzw. 13) in die Schmelze hinein. Die Länge X des Abschnitts beträgt mindestens 200 mm, vorzugsweise mindestens 400 mm und/oder vorzugsweise höchstens 1200 mm.

Weiter haben die Elektroden 24 einen Abstand Y zur Stirnwand 20 des Einlegevorbaus 3. Der Abstand Y wird parallel zur Transportrichtung des Beschickungsguts gemessen. Der Abstand Y von der Stirnwand beträgt mindestens 400 mm, vorzugsweise mindestens 700 mm und/oder vorzugsweise höchstens 2000 mm.

Zudem sind die Elektroden 24 in einem Abstand Z (vgl. Fig. 6) von der Steinkante 23 des Einlegevorbaus 3 angeordnet, der mindestens 200 mm, vorzugsweise mindestens 400 mm und/oder vorzugsweise höchstens 800 mm beträgt. Der Abstand Z wird in Richtung des Bodens 26 des Einlegevorbaus 3 von der Steinkante 23 des Einlegevorbaus 3 ausgehend gemessen.

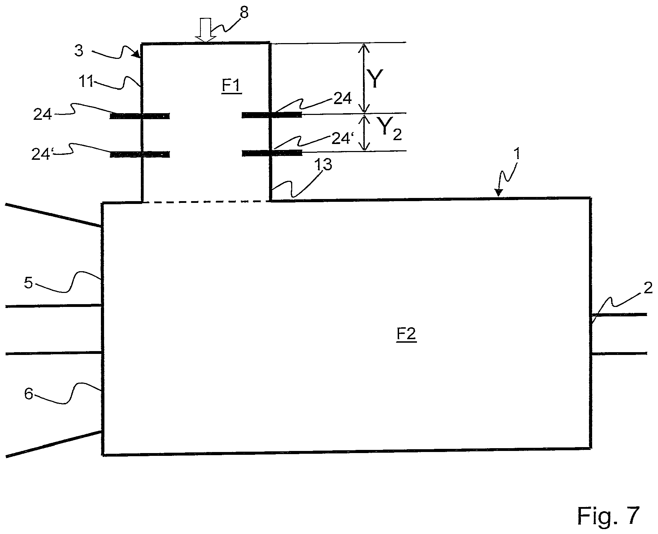

Das in Fig. 7 dargestellte Ausführungsbeispiel weist ein weiteres seitlich angeordnetes Paar von Elektroden 24' auf. Diese sind in einem Abstand Y2 von dem ersten Elektrodenpaar 24 angeordnet, welcher mindestens 200 mm, vorzugsweise mindestens 400 mm und/oder vorzugsweise höchstens 2000 mm beträgt. Der Abstand Y₂ wird analog zum Abstand Y ebenfalls parallel zur Transportrichtung des Beschickungsguts im Einlegevorbau 3 gemessen.

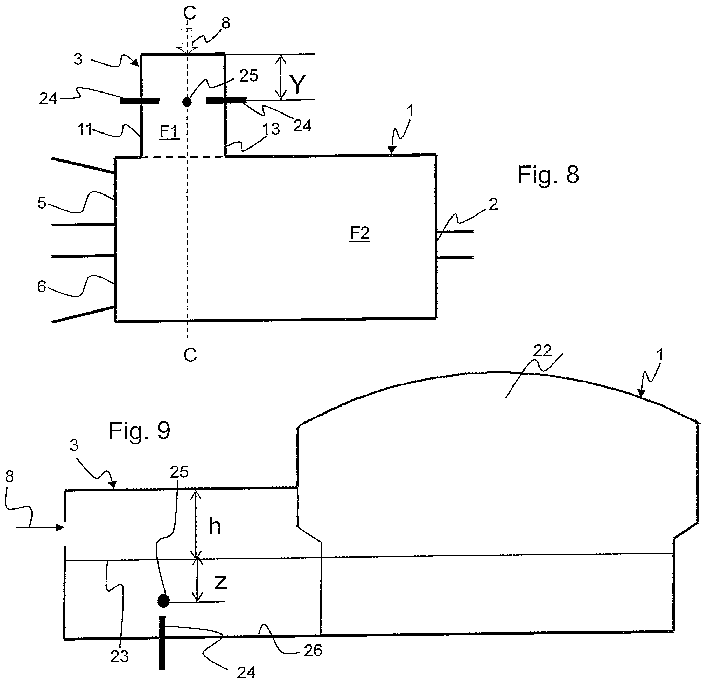

Gegenüber dem in den Fig. 5 und 6 dargestellten Ausführungsbeispiel weist das Ausführungsbeispiel der Fig. 8 und 9 eine weitere Bodenelektrode 25 auf, welche etwa mittig zwischen den beiden seitlichen Elektroden 24 im Boden 26 des Einlegevorbaus 3 angeordnet ist und nach oben gerichtet, ebenfalls quer zur Transportrichtung des Beschickungsguts in dem Einlegevorbau 3 in die Schmelze hineinragt. Die Bodenelektrode 25 hat den gleichen Abstand Y von der Stirnwand 20 wie die seitlichen Elektroden 24.

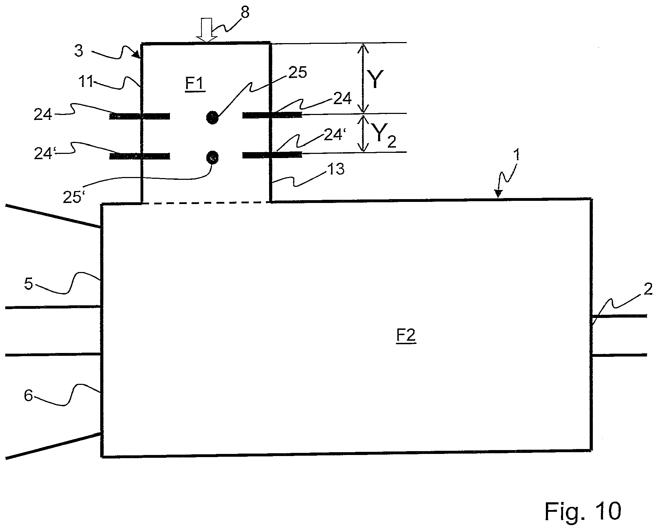

Das in Fig. 10 dargestellte weitere Ausführungsbeispiel einer erfindungsgemäßen Glasschmelzanlage stellt hinsichtlich der Anordnung der Elektroden eine Kombination der Ausführungsbeispiele gemäß Fig. 7 und Fig. 8/9 dar. Es weist zwei Paare von seitlichen Elektroden 24, 24' sowie jeweils einer Bodenelektrode 25, 25' auf, die einem Paar von seitlichen Elektroden 24, 24' zugeordnet ist.

### Bezugszeichenliste:

- 1, 1': Schmelzwanne
- 2: Auslass
- 3, 3': Einlegevorbau
- 4: Einlass der Schmelzwanne 1
- 5: Brennerport
- 6: Brennerport
- 7: Beschickungsgut (Gemenge, nicht geschmolzen)
- 8, 8': Pfeil (kennzeichnet die Zufuhr von Beschickungsgut mittels einer Beschickungsvorrichtung)
- 9: Glasschmelze
- 11: Seitenwand des Einlegevorbaus 3
- 12: Seitenwand des Einlegevorbaus 3
- 13: Seitenwand des Einlegevorbaus 3
- 14: Seitenwand der Schmelzwanne 1
- 15: Seitenwand der Schmelzwanne 1
- 16: Seitenwand der Schmelzwanne 1
- 17: Seitenwand der Schmelzwanne 1
- 18: Überdachung
- 20: Stirnwand des Einlegevorbaus 3
- 21: Gasraum
- 22: Brennerraum
- 23: Steinkante (Becken-Oberkante) des Einlegevorbaus 3
- 24, 24': Elektrode
- 25, 25': Bodenelektrode
- 26: Boden des Einlegevorbaus 3
- 27, 27': freie Fläche ohne Gemengebedeckung
- F1: Beschickungsfläche
- F2: Schmelzfläche

## Patentansprüche

1. Glasschmelzanlage mit einer Schmelzwanne (1) mit U-Flammenbeheizung, wobei die Schmelzwanne (1) einen Einlass für Zuführung des Beschickungsguts, einen Auslass für die Entnahme des geschmolzenen Glases sowie eine Schmelzfläche (F2) von mindestens 40 m² aufweist,
mit mindestens einem seitlich angeordneten und mit dem Einlass der Schmelzwanne (1) verbundenen Einlegevorbau (3) für die Eingabe des Beschickungsguts (7), der Seitenwände (11, 12, 13) aufweist, die zusammen mit dem Einlass der Schmelzwanne eine Beschickungsfläche (F1) begrenzen, und
mit einer Beschickungsvorrichtung,
wobei der Einlegevorbau (3) eine Überdachung (18) aufweist, die zur Beschickungsvorrichtung hin eine Stirnwand (20) aufweist, die mit der Überdachung (18) einen Gasraum (21) einschließt, der zur Schmelzwanne (1) hin offen ist, **dadurch gekennzeichnet, dass** die Beschickungsfläche (F1) des Einlegevorbaus (3) mindestens 8 m² und bei einer Schmelzfläche (F2) größer als oder gleich 115 m² mindestens 7 % der Schmelzfläche (F2) der Schmelzwanne (1) beträgt.

2. Glasschmelzanlage nach Anspruch 1, **dadurch gekennzeichnet, dass** die Beschickungsfläche (F1) des Einlegevorbaus (3) bei einer Schmelzfläche (F2) größer als oder gleich 90 m² mindestens 9% der Schmelzfläche (F2) der Schmelzwanne (1) beträgt.

3. Glasschmelzanlage nach Anspruch 1, **dadurch gekennzeichnet, dass** die Beschickungsfläche (F1) des Einlegevorbaus (3) bei einer Schmelzfläche (F2) größer als oder gleich 80 m² mindestens 10 % der Schmelzfläche (F2) der Schmelzwanne (1) beträgt.

4. Glasschmelzanlage nach einem der vorhergehenden Ansprüche, **dadurch gekennzeichnet, dass** der Scheitel der Überdachung (18) des Einlegevorbaus (3) einen Abstand (h) von einer Steinkante (4) des Einlegevorbaus (3) von mindestens 400 mm, vorzugsweise mindestens 500 mm aufweist.

5. Glasschmelzanlage nach einem der vorhergehenden Ansprüche, **dadurch gekennzeichnet, dass** der Einlegevorbau (3) eine elektrischen Widerstandsbeheizung aufweist.

6. Glasschmelzanlage nach Anspruch 5, **dadurch gekennzeichnet, dass** der Einlegevorbau (3) mindestens eine Elektrode, vorzugsweise mindestens zwei Elektroden, für die elektrischen Widerstandsbeheizung aufweist.

7. Glasschmelzanlage nach Anspruch 5 oder 6, **dadurch gekennzeichnet, dass** mindestens zwei Elektroden (24, 24') seitlich in die Schmelze hineinragen, wobei jeweils zwei seitlich hineinragende Elektroden gegenüber liegend im Einlegevorbau (3) angeordnet sind und ein Elektrodenpaar ausbilden.

8. Glasschmelzanlage nach einem der Ansprüche 5 bis 7, **dadurch gekennzeichnet, dass** mindestens eine Elektrode vom Boden des Einlegevorbaus (3) in die Schmelze hineinragt und eine Bodenelektrode (25) ausbildet.

9. Glasschmelzanlage nach Anspruch 8, **dadurch gekennzeichnet, dass** jede Bodenelektrode (25) einem seitlich in die Schmelze hineinragendem Elektrodenpaar (24, 24') zugeordnet und in gleichem Abstand (Y) von der Stirnwand (20) angeordnet ist.

10. Glasschmelzanlage nach einem der Ansprüche 5 bis 9, **dadurch gekennzeichnet, dass** die mindestens zwei Elektroden (24, 24', 25) mit einem vorderen Abschnitt (X) in die Glasschmelze hineinragen, wobei die Länge des Abschnitts (X) mindestens 200 mm, vorzugsweise mindestens 400 mm, beträgt.

11. Glasschmelzanlage nach einem der Ansprüche 5 bis 10, **dadurch gekennzeichnet, dass** die zur Stirnwand (20) benachbarten mindestens zwei Elektroden (24, 25) einen Abstand (Y) von der Stirnwand (20) des Einlegevorbaus aufweisen, welcher mindestens 400 mm, vorzugsweise mindestens 700 mm, beträgt.

12. Glasschmelzanlage nach einem der Ansprüche 5 bis 11, **dadurch gekennzeichnet, dass** ein weiteres seitlich angeordnetes Elektrodenpaar (24') und/oder eine weitere Bodenelektrode (25') einen Abstand (Y₂) zu einem zur Stirnwand (20) des Einlegevorbaus (3) benachbarten seitlich angeordneten Elektrodenpaar (24) und/oder zu einer zur Stirnwand (20) des Einlegevorbaus (3) benachbarten Bodenelektrode (25) aufweist, welcher mindestens 200 mm, vorzugsweise mindestens 400 mm, beträgt.

13. Glasschmelzanlage nach einem der Ansprüche 5 bis 12, **dadurch gekennzeichnet, dass** jedes seitlich hineinragende Elektrodenpaar (24, 24') einen Abstand (Z) von der Steinkante (23) des Einlegevorbaus (3) aufweist, der mindestens 200 mm, vorzugsweise mindestens 400 mm, beträgt.

14. Glasschmelzanlage nach einem der vorhergehenden Ansprüche, **dadurch gekennzeichnet, dass** der Einlegevorbau mindestens einen vom Boden in die Schmelze eintauchenden Brenner zur Beheizung aufweist.

## Claims

1. Glass melting device with a melting bath (1) with U-flame heating, wherein the melting bath (1) comprises an inlet for the batch material, an outlet for the removal of the molten glass as well as a melting surface (F2) of at least 40 m²,
with at least one laterally arranged doghouse (3), which is connected to the melting bath (1), for delivering the batch material (7) and which has side walls (11, 12, 13) which together with the inlet of the melting bath delimit a batch supply surface (F1), and with a batch charging device,
wherein the doghouse (3) has a roofing (18) which towards the batch charging device has a front wall (20) which with the roofing (18) encloses a gas room (21) which is open towards the melting bath (1), **characterised in that** the batch supply surface (F1) of the doghouse (3) is at least 8 m² and in the case of a melting surface (F2) greater than or equal to 115 m² makes up at least 7% of the melting surface (F2) of the melting bath (1).

2. Glass melting device according to claim 1 **characterised in that** the batch surface (F1) of the doghouse (3) in the case of a melting surface (F2) of greater than or equal to 90 m² makes up at least 9% of the melting surface (F2) of the melting batch (1).

3. Glass melting device according to claim 1 **characterised in that** the batch surface (F1) of the doghouse (3) with a melting surface (F2) of greater than or equal to 80 m² makes up at least 10% of the melting surface (F2) of the melting bath (1).

4. Glass melting device according to any one of the preceding claims **characterised in that** the crown of the roofing (18) of the doghouse (3) is at a distance (h) of at least 400 mm, preferably at least 500 mm from a stone edge (4) of the doghouse (3).

5. Glass melting device according to any one of the preceding claims **characterised in that** the doghouse (3) comprises electrical resistance heating.

6. Glass melting device according to claim 5 **characterised in that** the doghouse (3) comprises at least one electrode, preferably at least two electrodes, for the electrical resistance heating.

7. Glass melting device according to claim 5 or 6 **characterised in that** at least two electrodes (24, 24') project laterally into the melt, wherein in each case two laterally projecting electrodes are arranged opposite each other in the doghouse (3) and form an electrode pair.

8. Glass melting device according to any one of claims 5 to 7 **characterised in that** at least one electrode projects from the base of the doghouse (3) into the melt and forms a base electrode (25).

9. Glass melting device according to claim 8 **characterised in that** each base electrode (25) is assigned to an electrode pair (24, 24') projecting laterally into the melt and is arranged at the same distance (Y) from the front wall (20).

10. Glass melting device according to any one of claims 5 to 9 **characterised in that** the at least two electrodes (24, 24', 25) projects with a front section (X) into the glass melt, wherein the length of the section (X) is at least 200 mm, preferably at least 400 mm.

11. Glass melting device according to any one of claims 5 to 10 **characterised in that** the at least two electrodes (24, 25) adjacent to the front wall (20) are at a distance (Y) from the front wall (20) of the doghouse of at least 400 mm, preferably at least 700 mm.

12. Glass melting device according to any one of claims 5 to 11 **characterised in that** a further laterally arranged electrode pair (24') and/or a further base electrode (25') is/are at a distance (Y₂) from a laterally arranged electrode pair (24) adjacent to the front wall (20) of the doghouse (3) and/or from a base electrode (25) adjacent to the front wall (20) of the doghouse (3) which is at least 200 mm, preferably at least 400 mm.

13. Glass melting device according to any one of claims 5 to 12 **characterised in that** each laterally projecting in electrode pair (24, 24') is at a distance (Z) from the stone edge (23) of the doghouse (3) which is at least 200 mm, preferably at least 400 mm.

14. Glass melting device according to any one of the preceding claims **characterised in that** the doghouse comprises at least one burner for heating which immerses in the melt.

## Revendications

1. Installation de fusion du verre avec un bassin de fusion (1) avec chauffage à boucle, le bassin de fusion (1) comportant une entrée pour introduire le matériau d'alimentation, une sortie pour le prélèvement du verre fondu ainsi qu'une surface de fusion (F2) d'au moins 40 m²,
avec au moins une niche d'enfournement (3) disposée latéralement et reliée à l'entrée du bassin de fusion (1) pour l'introduction du matériau d'alimentation (7), qui comporte des parois latérales (11, 12, 13), qui limitent une surface d'alimentation (F1) ensemble avec l'entrée du bassin de fusion, et
avec un dispositif d'alimentation,
la niche d'enfournement (3) comportant une couverture (18), qui comporte une paroi frontale (20) vers le dispositif d'alimentation, qui englobe une chambre d'expansion (21) avec la couverture (18), qui est ouvert vers le bassin de fusion (1),
**caractérisée en ce que** la surface d'alimentation (F1) de la niche d'enfournement (3) est au moins de 8 m² et pour une surface de fusion (F2) supérieure ou égale à 115 m², au moins 7% de la surface de fusion (F2) du bassin de fusion (1).

2. Installation de fusion du verre selon la revendication 1, **caractérisée en ce que** la surface de chargement (F1) de la niche d'enfournement (3) est d'au moins 9% de la surface de fusion (F2) du bassin de fusion (1) pour une surface de fusion (F2) supérieure ou égale à 90 m².

3. Installation de fusion du verre selon la revendication 1, **caractérisée en ce que** la surface d'alimentation (F1) de la niche d'enfournement (3) pour une surface de fusion (F2) supérieure ou égale à 80 m², est au moins 10% de la surface de fusion (F2) du bassin de fusion (1).

4. Installation de fusion du verre selon l'une quelconque des revendications précédentes, **caractérisée en ce que** le sommet de la couverture (18) de la niche d'enfournement (3) comporte une distance (h) d'un bord de pierre (4) de la niche d'enfournement (3) d'au moins 400 mm, de préférence d'au moins 500 mm.

5. Installation de fusion du verre selon l'une quelconque des revendications précédentes, **caractérisée en ce que** la niche d'enfournement (3) comporte un chauffage à résistance électrique.

6. Installation de fusion du verre selon la revendication 5, **caractérisée en ce que** la niche d'enfournement (3) comporte au moins une électrode, de préférence au moins deux électrodes, pour le chauffage à résistance électrique.

7. Installation de fusion du verre selon la revendication 5 ou 6, **caractérisée en ce qu'**au moins deux électrodes (24, 24') font latéralement saillie dans le bain de verre, deux électrodes faisant latéralement saillie à l'intérieur étant respectivement disposées de façon opposée dans la niche d'enfournement (3) et constituant une paire d'électrodes.

8. Installation de fusion du verre selon l'une quelconque des revendications 5 à 7, **caractérisée en ce qu'**au moins une électrode fait saillie dans le bain de verre depuis le fond de la niche d'enfournement (3) et constitue une électrode de fond (25).

9. Installation de fusion du verre selon la revendication 8, **caractérisée en ce que** chaque électrode de fond (25) est attribuée à une paire d'électrodes (24, 24') faisant saillie latéralement dans le bain de verre et est disposée à la même distance (Y) de la paroi frontale (20).

10. Installation de fusion du verre selon l'une quelconque des revendications 5 à 9, **caractérisée en ce qu'**au moins deux électrodes (24, 24', 25) avec une section avant (X) font saillie dans le bain de verre, la longueur de la section (X) étant d'au moins 200 mm, de préférence au moins de 400 mm.

11. Installation de fusion du verre selon l'une quelconque des revendications 5 à 10, **caractérisée en ce qu'**au moins deux électrodes (24, 25) voisines de la paroi frontale (20) comportent une distance (Y) de la paroi frontale (20) de la niche d'enfournement, laquelle est au moins de 400 mm, de préférence au moins de 700 mm.

12. Installation de fusion du verre selon l'une quelconque des revendications 5 à 11, **caractérisée en ce qu'**une autre paire d'électrodes (24') disposée latéralement et/ou une autre électrode de fond (25') comporte une distance (Y₂) par rapport à une paire d'électrodes (24) disposée latéralement adjacentes à la paroi frontale (20) de la niche d'enfournement (3) et/ou par rapport à une électrode de fond (25) adjacente à la paroi frontale (20) de la niche d'enfournement (3), laquelle est d'au moins 200 mm, de préférence au moins 400 mm.

13. Installation de fusion du verre selon l'une quelconque des revendications 5 à 12, **caractérisée en ce que** chaque paire d'électrodes faisant saillie latéralement (24, 24') comporte une distance (Z) du bord de pierre (23) de la niche d'enfournement (3), qui est au moins de 200 mm, de préférence au moins de 400 mm.

14. Installation de fusion du verre selon l'une quelconque des revendications précédentes, **caractérisée en ce que** la niche d'enfournement comporte au moins un brûleur pour le chauffage plongeant depuis le fond dans le bain de verre.
